Europäisches Patentamt

European Patent Office

Office européen des brevets

(11) Publication number: **0 362 454 A1**

# EUROPEAN PATENT APPLICATION

(21) Application number: 88500089.3

(51) Int. Cl.5: **G03B 19/02 , G03B 17/32**

(22) Date of filing: **05.10.88**

The title of the invention has been amended (Guidelines for Examination in the EPO, A-III, 7.3).

(43) Date of publication of application:
**11.04.90 Bulletin 90/15**

(84) Designated Contracting States:
**AT BE CH DE FR GB GR IT LI LU NL SE**

(71) Applicant: **Martin Godinez, Carlos**
**C/ Pascual Perez, 17**
**E-03001 Alicante(ES)**

(72) Inventor: **Martin Godinez, Carlos**
**C/ Pascual Perez, 17**
**E-03001 Alicante(ES)**

(54) **Photograph duplicator for instant cameras.**

(57) The present invention consists of a photograph duplicator that can be coupled to instant developing cameras including a dim plate or slide (1) provided with a plurality of oblong windows or apertures (2, 3), preferably two, that fits on the instant developing plate by means of a groove in the camera plate holder, additionally on one of the said plate ends, the end opposite to the introduction in the camera, there is a mechanism (4) regulating the superposition of the dim slide upon the developing plate.

Fig 1

The present invention relates to a photographs duplicator appliance that can be coupled to instant developing cameras, based on the limited surface of exposition of the sensitive plate.

The cameras that can be found in the market for this kind of professional work related to the commercialization of Identity Card type photographs, of frecuent use, are only capable to reproduce four specimens in each automatic developing process corresponding to the exposition of a single instant developing plate.

The aim of the invention is to develop an appliance permitting to make the best use, in the shot, of the instant developing plate since in the shot the surface exposed to the light is limited, and duplicating the number of specimens by means of two shots on a single developing plate.

As infered herefrom, it means a reduction of aproximatively the 50% of each photograph price, as the cost of each shot is negligible comapred to the price of the developing plate, which is what basically raises the price of the method.

The appliance basically includes a plate or dim slide provided with oblong windows or apertures preferably two, that is coupled to the instant developing plate through the groove of the camera plate holder, in addition one of said plate ends, the opposite to the end by which it is inserted in the camera, presents a mechanism for regulating the superposition of the dim slide upon the developing plate.

Additionally, it has coupled a metal piece that will connect to the before said plate or dim slide and this connecting piece is applied to the camera plate holder groove, in order to ease the insertion and extraction of the duplicating plate or slide.

The appliance is complemented with a piece coupling to the camera viewfinder that determines a plurality in the view field, preferably two, corresponding to the number of windows or apertures made in the duplicating slide.

The following description referred to the attached figures, without any restricting nature, will show more clearly the further features and advantages of the present invention.

DETAILED DESCRIPTION OF THE INVENTION

Figure 1 is the perspective view of a duplicating appliance, according to the above general lines of the invention.

Figure 2 also shows in perspective, the working position of the mechanism regulating the penetration of the appliance in the camera.

Figure 3 shows details of the complementary piece to be coupled to the viewfinder and to the penetration groove of the appliance subject of the invention.

Figure 4, the connecting piece is a complementary piece that is placed in the camera plate holder to ease the insertion and extraotion of the duplicating plate.

The appliance includes a slide 1 made of a stainless steal sheet or similar, rectangle shaped of suitable measures in order to substitute the one present originally in this type of cameras and the intention of which is to prevent the exposition to the light of the developing plate and to limit it during the shot.

The metallic slide 1 presents two oblong windows or apertures 2 and 3, which measures and location in the sheet have to be the most favourable in order to obtain the perfect adjustment of the developing plate surfaces exposed to the light while the two shots, to prevent them from superposition and to make the very best use of the maximum of the plate surface in each shot.

Said metallic plate 1 includes, coupled to the end opposite to the insertion in the camera plate holder, a number of laminar pieces or plastic butts 4 that will act as butts to assure the position of the windows 2 and 3 in the subsequent shots.

The plastic piece 4, integrally joined to the metallic plate 1, presents an inside central drill hole through which passes a screw and gets located not very tightly in order to permit the said plastic piece to rotate, realizing the butts 5 and 6.

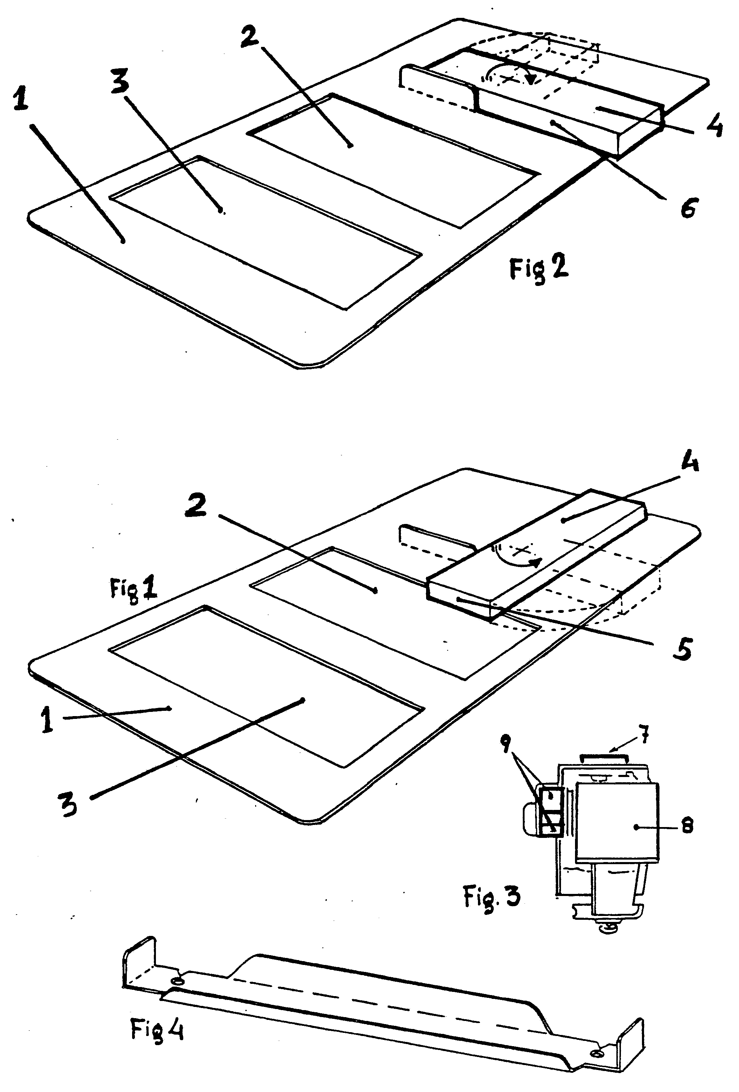

When piece 4 reaches butt 5, the position shown in figure 1 is conserved, the appliance is ready to be introduced in the camera plate holder groove as far as the plate holder walls hit butt 5 and through window 3 the apropiate surface is exposed to the light.

When piece 4 rotates the position shown in figure 2 is reached, and sheet 1 can be introduced farther on inside the camera 8 plate holder 7 as in figure 3, until the walls hit butt 6, position in which through window 2 the corresponding surface of the developing plate, that previously was concealed, is now exposed to the light, obtaining therefore the duplication of the specimens.

The connecting piece, figure 4, is a metal piece complementary to the duplicating piece 1, that is fixed, by means of two screws located in the camera plate holder, to the groove sides in order to ease the insertion and extraction of the duplicator 1.

With number 9 in figure 3 is shown a complementary piece, coupling to the camera 8 viewfinder that determines two view fields corresponding to both oblong windows or apertures 2 and 3.

The object of the present patent is sufficiently described herein as a way of example and it represents one of the different realizations of this appliance based on the present document; any alteration in the shape, measures or materials or others not basical, will not be considered to effect its essential feature.

## Claims

1. Photographs duplicator improved appliance for instant cameras to be introduced in said camera plate holder superposed to the developing plate, characterized in
the said appliance includes a dim slide, preferably metallic, provided with, at least two oblong apertures or windows with a medium zone separating them, having in one of its side ends, opposite to the introduction side, a mechanism limiting said penetration consisting in a plastic body free to rotate within the butts.
With all this, when above said metallic slide introduced through the corresponding groove, as far as permitted by the above said penetration limiting mechanism, of the camera, will be determined on the developing plate two exposure fields corresponding to said two apertures or windows, and consequently duplicating the number of exposures on a single instant developing plate.

2. Photographs duplicator improved appliance for instant cameras, according to claim 1, characterized in that the connecting piece, metallic piece complementary to the duplicating plate fixed on a side of the camera plate holder, in the groove by which the duplicator is introduced and extracted, will ease, without obstacles, the function of the duplicating metallic plate.

3. Photographs duplicator improved appliance for instant cameras, according to claim one characterized in that, complementary, upon the camera viewfinder is coupled a piece provided with two apertures limiting two view fields corresponding to the two exposure areas indicated herebefore.

Fig 2

Fig 1

Fig. 3

Fig 4

European Patent
Office

EUROPEAN SEARCH REPORT

Application Number

EP 88 50 0089

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | US-A-3 124 050 (BAY)<br>* Column 1, lines 7-30; column 2, lines 38-42; figures 1,9,10 *<br>--- | 1-3 | G 03 B 19/02<br>G 03 B 17/32 |
| A | US-A-4 067 025 (NEBEL)<br>* Column 5, lines 3-23; figures 2-4 *<br>----- | 1 | |

TECHNICAL FIELDS
SEARCHED (Int. Cl.3)

G 03 B

The present search report has been drawn up for all claims

| Place of search | Date of completion of the search | Examiner |
|---|---|---|
| THE HAGUE | 06-06-1989 | GRUNFELD M.Y.E. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P0401)